# EUROPEAN PATENT APPLICATION

(11) **EP 4 220 811 A1**
(43) Date of publication of application: **02.08.2023**
(21) Application number: 21872747.7
(22) Date of filing: 27.08.2021
(51) Int. Cl.: H01M 10/42, H01M 10/04, H01M 10/48, H01M 50/531

(54) **BATTERY CELL TRACKING SYSTEM AND BATTERY**

(30) Priority: 22.09.2020 KR 20200122178
(71) Applicant: LG Electronics Inc., Seoul 07336 (KR)
(72) Inventor: SEO, Hyunjong, Seoul 06772 (KR); KIM, Daewhan, Seoul 06772 (KR); JIN, Honggee, Seoul 06772 (KR); LEE, Injae, Seoul 06772 (KR); BAE, Ilju, Seoul 06772 (KR)
(74) Representative: Katérle, Axel
(86) International application number: PCT/KR2021/011542
(87) International publication number: WO 2022/065717

(57) **Abstract**

A battery cell tracking system comprises: a controller for generating marking information; a marking unit for marking on a part of an electrode, the generated marking information; and a reading unit for reading the marked marking information from the electrode. The controller registers the read marking information and process data to a server.

## Description

### [Technical Field]

An embodiment relates to a battery cell tracking system and a battery.

### [Background Art]

A pouch type lithium secondary batteries (hereinafter, battery cell) as a unit cell that constitutes a battery have flexibility. Thus, its shape is relatively free, is light in weight and is excellent in safety such that demand is increasing as a power source for portable electronic devices such as a mobile phone, a camcorder, and a notebook computer.

A manufacturing process of a battery cell is largely divided into three processes: an electrode process, an assembly process, and a formation process.

An anode and a cathode are made by the electrode process. Materials are mixed in an appropriate ratio, the anode with aluminum and the cathode with copper foil are coated, it is pressed to a certain thickness through a roll press to flatten them, and it is cut according to the electrode size using a slitting process.

In the assembly process, an anode, a separator, and a cathode are alternately stacked layer by layer through notching to remove unnecessary parts from the cut electrode. A stack and folding process in which the electrode is folded several times according to the battery capacity or a winding process in which the electrode and the separator are overlapped and rolled are performed. Then, after being packed with an aluminum film packaging material, an electrolyte is injected and sealed in a vacuum state.

In the formation process, the battery cell is activated by repeating charge/discharge of the assembled battery cell, and a degassing process in which gas generated in the battery cells is discharged during activation is performed.

Conventionally, data for each process was not managed, so when a defect occurs during battery cell manufacturing, it is impossible to identify and track the cause of the defect.

Therefore, when a defect occurs during battery cell manufacturing, a large amount of battery cells manufactured for 30 minutes before and after the defect occurs are discarded, resulting in a very large economic loss.

In addition, even if the cause of the defect was identified, there was a problem that it took one to several days to complete the cause investigation.

### [Disclosure]

### [Technical Problem]

An object of embodiments is to solve the foregoing and other problems.

The other object of the embodiment is to provide a battery cell tracking system and a battery that can easily identify and track the cause of a battery cell defect.

Another object of the embodiment is to provide a battery cell tracking system and a battery capable of quickly identifying the cause of a battery cell defect.

The technical challenges of the embodiments are not limited to those described herein and include those that can be grasped through the description of the invention.

### [Technical Solution]

According to one aspect of the embodiment to achieve the above or other object, a battery cell tracking system, comprising: a controller configured to marking information; a marking unit configured to mark the generated marking information on a part of the electrode; and a reading unit configured to read the marked marking information from the electrode, wherein the controller is configured to register the read marking information and process data with the server.

According to another aspect of the embodiment, a batter formed by stacking unit cells.

The unit cell includes at least one electrode, the at least one electrode includes a tab including marking information, and the marking information includes an identifier, process equipment, and process time.

### [Advantageous Effects]

Effects of a battery cell tracking system and a battery according to the embodiments are described as follows.

According to at least one of the embodiments, after a marking information is marked for each tap of the electrode that has been received and cut, the marking information is then read in each process and the process data used in the process (including inspection data if necessary) is registered, thereby managing data related to each process. Therefore, even if a defect occurs during the battery cell manufacturing process, it is easy to identify and track the cause of the defect in the battery cell, and it is possible to quickly identify the cause of the defect.

A further scope of applicability of the embodiments will become apparent from the detailed description that follows. However, since various changes and modifications within the spirit and scope of the embodiments can be clearly understood by those skilled in the art, it should be understood that the detailed description and specific embodiments, such as preferred embodiments, are given by way of example only.

### [Description of Drawings]

FIG. 1 is a block diagram illustrating a battery cell tracking system according to an embodiment.
FIG. 2 is a flowchart illustrating a battery cell process according to an embodiment.
FIG. 3 shows an array position of each of a marking unit and a reading unit of the battery cell tracking system according to the embodiment.
FIG. 4 shows a state in which marking information is marked on a tab of an electrode using a laser.
FIG. 5 shows marking information marked on a tab of an electrode.
FIG. 6 is an exemplary view of a shape of marking information marked on a tab of an electrode.
FIG. 7 shows a plurality of dots included in marking information marked on a tab of an electrode.
FIG. 8 is a cross-sectional view showing a tab of an electrode.
FIG. 9 shows a state in which marking information is read from a tab of an electrode using a reading unit.

### [Mode for Invention]

Hereinafter, preferred embodiments of the present disclosure will be described in detail with reference to the accompanying drawings. However, the technical idea of the present disclosure is not limited to some of the described embodiments, but may be implemented in a variety of different forms, and if it is within the scope of the technical idea of the present disclosure, one or more of the components among the embodiments can be used by selectively combining and substituting. In addition, terms (including technical and scientific terms) used in the embodiments of the present disclosure may be interpreted in a meaning that can be generally understood by those of ordinary skill in the art to which the present disclosure belongs, unless explicitly specifically defined and described, and commonly used terms, such as terms defined in a dictionary, can be interpreted in consideration of contextual meanings of related technologies.

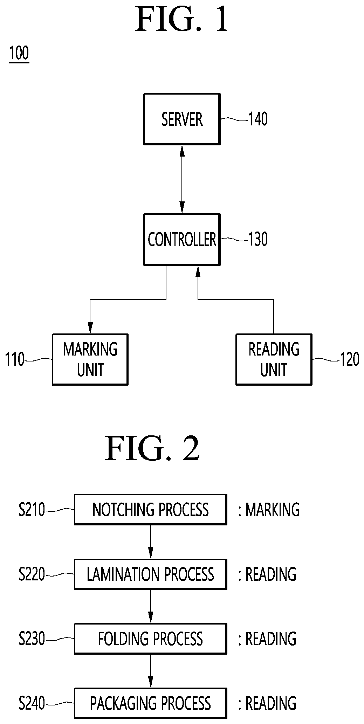

FIG. 1 is a block diagram illustrating a battery cell tracking system according to an embodiment.

Referring to FIG. 1, the battery cell tracking system 100 according to an embodiment may comprise a controller 130, a marking unit 110, and a reading unit 120. The battery cell tracking system 100 according to an embodiment may further comprise a server 140. The server 140 may not be comprised in the battery cell tracking system 100. The battery cell tracking system 100 according to an embodiment may comprise more components than these above.

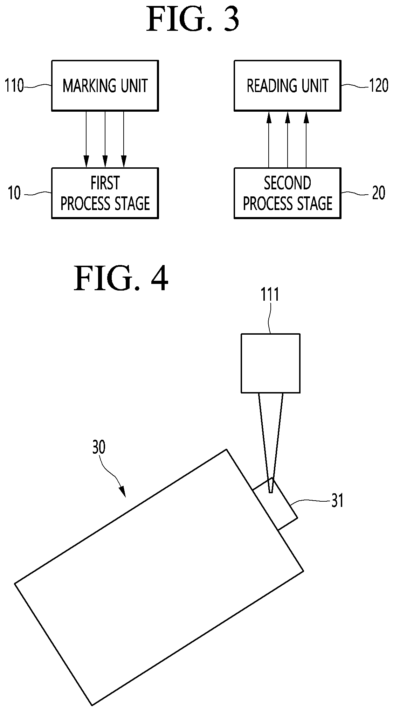

According to the embodiment, the battery cell tracking system 100 may mark a part of each electrode (30 of FIG. 4) received in the process of manufacturing the battery cell to include marking information in the marked area, and the marked marking information may be read in each subsequent process to register with the server 140 with process data. Accordingly, even if a defect occurs in the battery cell manufacturing process, it can be easy to identify and track the cause of a defect, and it can be possible to quickly identify the cause of a defect.

As shown in FIG. 3, the marking unit 110 may be disposed on, for example, a first process stage 10, and the reading unit 120 may be disposed on, for example, a second process stage 20. For example, after a first process may be performed on an object in the first process stage 10, the object may be moved to the second process stage 20. Next, a second process may be performed on the object in the second process stage 20. The object is an object on which a process has been performed in a previous process, and may be an intermediate material from which an electrode cell is manufactured.

The second process stage 20 may comprise a plurality of process stages, each of which performs a different process. In this case, the electrode (30 of FIG. 4) may be moved to the second process stage 20, that is, to each of the plurality of process stages after the first process is performed at the first process stage 10. After the process is performed at each of the plurality of process stages, the marking information may be read at the electrode (30 of FIG. 4) and registered with the server 140 with the process data.

Thus, although the reading unit 120 is shown as being disposed only in the second process stage 20 in FIG. 3, the reading unit 120 may be disposed in a stage for a lamination process S220, a stage for a folding process S230, and a stage for a packaging process S240, respectively. Accordingly, in the embodiment, the reading unit 120 may be provided in a plurality. After the process for the corresponding electrode is performed at the stage for each process S220, S230 and S240, the marking information from the electrode is read by the reading unit 120, and then registered with the server 140 with the process data. Here, the process data may be process conditions associated with the process performed on the electrode in the corresponding process, and the like.

The controller 130 may manage and/or control the battery cell tracking system 100 as a whole.

For example, the controller 130 may generate the marking information. For example, the marking information may include an identifier, process equipment, and process time.

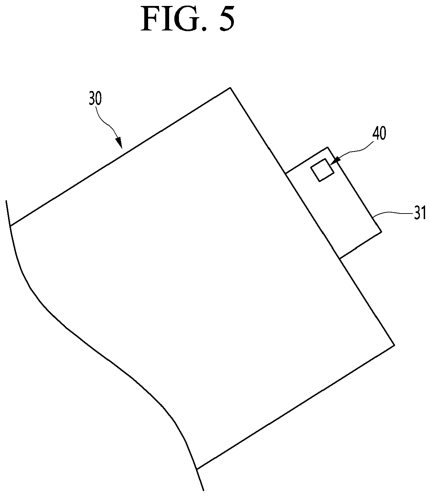

As will be explained later with reference to FIG. 4, the marking information may be marked on a part of the electrode 30, e.g., a tab 31. At this time, the marking information generated by the controller 130 may be electronic information, while the marking information marked on the tab 31 of the electrode 30 (40 of FIG. 5) may be physical information. That is, the electronic information may be information on the binary number, and the physical information may be information on the physical shape.

For example, the controller 130 may generate marking information each time the electrode 30 is received to manufacture a battery cell, but is not limited thereto.

For example, in order to manufacture a battery cell, an electrode wound on a roller may be unwound, and the unwound electrode may be cut and received as a unit of length. In this case, whenever the cut electrode 30 is received, the controller 130 may generate marking information to be marked on the cut electrode 30.

The controller 130 may determine in advance process information currently in use, such as the identifier of the roller currently in use, the order of electrodes 30 currently being received, and the like, and generate marking information based on the determined process information, but is not limited thereto.

The controller 130 may control the marking unit 110 and the reading unit 120. For example, the controller 130 may control the marking unit 110 to mark the marking information on the tap 31 of the electrode 30. For example, the controller 130 may control the reading unit 120 to read the marking information (40 of FIG. 5) marked on the tab 31 of the electrode 30.

The controller 130 may send the read marking information together with the process data to the server 140 and control the registration in the server 140. The process data may be process-related information such as pressure, current, temperature, and the like. When inspection data is added, the marking information may be registered in the server 140 together with the process data and the inspection data.

FIG. 2 is a flowchart illustrating a battery cell process according to an embodiment.

Referring to FIG. 2, the battery cell process according to the embodiment may comprise a notching process S210, a lamination process S220, the folding process S230, and the packaging process S240. The battery cell process according to the embodiment may comprise more processes than these above.

In the embodiment, the marking process may be performed in the notching process S210. For example, after the unnecessary parts are removed by the notching process S210 at the received electrode 30, a marking process may be performed on the tap 31 of the electrode 30.

In the embodiment, a reading process may be performed in the lamination process. For example, when an electrode (anode or cathode) is placed on a separator, the reading process for the corresponding electrode 30 may be performed. In this case, the electrode 30 may be an anode or a cathode, and may be an electrode marked with the marking information.

For example, the controller 130 may read the marking information (40 of FIG. 5) from the corresponding electrode 30 whenever the electrode 30 is placed on the separator, and combines the read marking information to generate one data set such that a representative identifier representing the data set may be generated.

In the embodiment, the reading process may be performed in the folding process. For example, after a process for a corresponding electrode is performed in the folding process, the marking information marked on an uppermost electrode among stacked electrodes may be read. The marking information read in this way may be registered in the server 140 together with process data.

In the embodiment, the reading process may be performed in the packaging process. For example, after a process for a corresponding electrode is performed in the packaging process, the marking information marked on an uppermost electrode among stacked electrodes may be read. The marking information read in this way may be registered in the server 140 together with process data.

For example, in each of the lamination process, the folding process, and the packaging process, the reading marking information may be registered with the server 140 together with the process data. If further inspection processes have been added in each of those processes, the marking information may be registered in the server 140 together with the process data and the inspection data.

Referring back to FIG. 1, the marking unit 110 may mark the marking information on the tab 31 of the electrode 30 based on the marking information generated by the controller 130.

The marking unit 110 may include a laser 111, as shown in FIG. 4.

The laser 111 may be, for example, a green laser having a wavelength of approximately 500 nm to 550 nm, but is not limited thereto. For example, the laser 111 may have an output of approximately 7 W to 15 W, but is not limited thereto. For example, the laser 111 may move at a speed of 3,000 m/s or more. For example, the laser 111 may move at a speed of 4,000 m/s, but is not limited thereto.

After the unnecessary parts of the electrode 30 are removed by the notching process, and before being transported for the lamination process, the marking of the marking information needs to be completed, Thus, a moving speed of the laser 111 may be very fast. In the embodiment, the marking information can be safely marked on the tab 31 of the electrode 30 without defects by the laser 111 having the moving speed of at least 3,000 m/s.

The marking information may be marked on a part of the tab 31 of the electrode 30 by a beam emitted from the laser 111.

As shown in FIG. 5, the marking information 40 may be marked on the tab 31 of the electrode 30 by a laser 111.

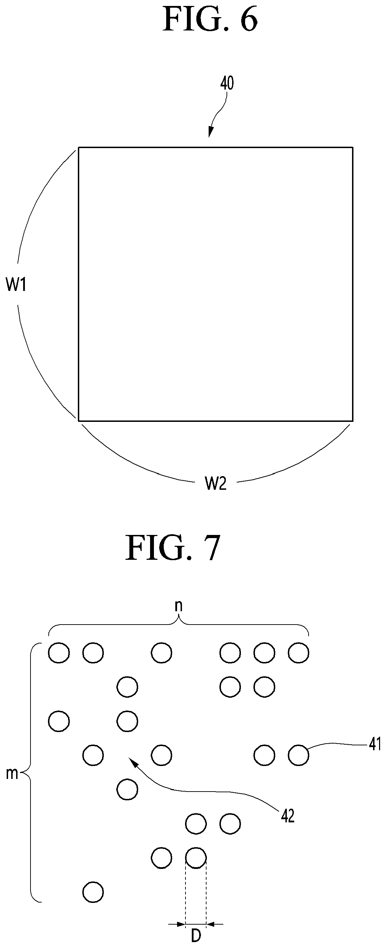

The marking information 40 may have a square shape as shown in FIG. 6, but is not limited thereto. The size W1*W2 of the marking information 40 having a square shape may be 3mm×3mm, but may be changed according to process requirements.

The marking information 40 may include a plurality of dots 41, as shown in FIG. 7. For example, the plurality of dots 41 may be arranged in a matrix. For example, the plurality of dots 41 may include m horizontal and n vertical dots. FIG. 7 shows the marking information 40 having a size W1*W2 of a plurality of dots 41 consisting of 8 horizontally and 8 vertically for convenience of description, but may have more or fewer numbers than these above. The size W1*W2 of the plurality of dots 41 may vary according to the diameter D of each of the plurality of dots 41, the number of the dots 41, or the separation distance between the dots 41.

In FIG. 7, the dot 41 represents the region etched by the beam of the laser 111, and the empty region 42 without the dot 41 may be the region in which the beam of the laser 111 has not been irradiated. Thus, the dots 41 may be referred to as an etched area, an irradiated area, or the like, and the empty region 42 may be referred to as a non-etched area, a nonirradiated area, or the like. The marking information 40 may also include empty region 42 together with the plurality of dots 41.

Thus, by a combination of an array position of the plurality of dots 41 or an array position of the empty regions 42, the desired information may be marked on the tab 31 of the electrode 30 as marking information.

For example, the dot 41 may be formed by a one-shot beam of the laser 111. The one-shot beam may be a one-time pulse beam. For example, the dot 41 may be formed by irradiating the tab 31 of the electrode 30 with a single-pulse beam having a very short section of the laser 111 moved to a specific position.

The dot 41 has, for example, a circular shape, but is not limited thereto.

The diameter D of the dot 41 may be 10 µm or less. When the diameter D of the dot 41 exceeds 10 µm, the size W1 * W2 of the marking information 40 marked on the tab 31 of the electrode 30 increases, and the larger the size W1 * W2 of the marking information 40, the lower the battery charging voltage may be due to obstructing the flow of current.

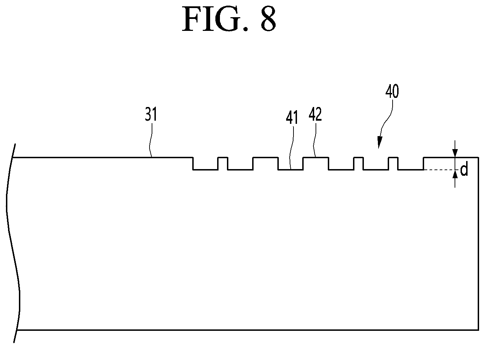

As shown in FIG. 8, the dot 41 may have a shape of a predetermined depth d from the surface of the electrode 30 to the inside by the one-shot beam of the laser 111. A part of the surface of the electrode 30 may be removed by the laser 111 to form a dot 41. In FIG. 8, the inner surface of the dot 41 is formed vertically, but the width of the dot 41 may decrease as it goes from the surface of the electrode 30 to the inside. In this case, the inner surface of the dot 41 may be formed in a round shape, but is not limited thereto.

For example, the depth d of the dot 41 may be 1.7 µm or less, but is not limited thereto. When the depth d of the dot 41 exceeds 1.7 µm, the greater the depth d of the dot 41, the lower the battery charging voltage may be due to obstructing the flow of current.

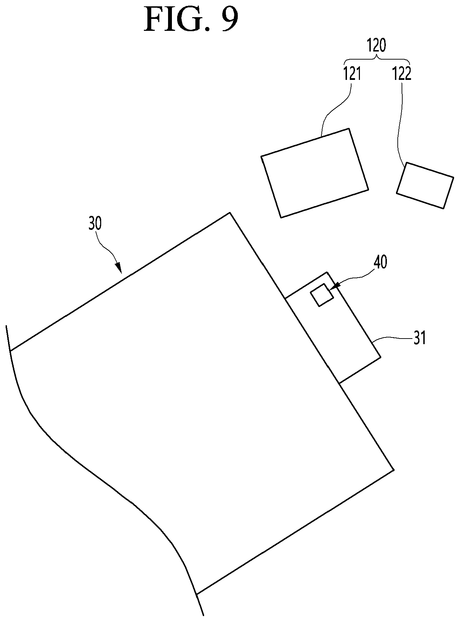

Meanwhile, as shown in FIG. 9, the reading unit 120 may include a camera 121 and a lighting 122.

For example, the camera 121 may acquire a video image as reading information from the tap 31 of the electrode 30. For example, the lighting 122 applies light to the tab 31 of the electrode 30 in order to capture the shape of the dot 41, which is a minute size of the marking information 40 marked on the tab 31 of the electrode 30.

The controller 130 may decode the marking information 40 by reading the video image acquired from the camera 121. The decoded marking information 40 may be registered in the server 140 together with process data and inspection data.

The above detailed description should not be construed as limiting in all respects and should be considered illustrative. The scope of the embodiments should be determined by reasonable interpretation of the appended claims, and all changes within the equivalent range of the embodiments are included in the scope of the embodiments.

### [Industrial Applicability]

The embodiments may be used in facilities or devices that manufacture batteries.

## Claims

1. A battery cell tracking system, comprising:
a controller configured to marking information;
a marking unit configured to mark the generated marking information on a part of the electrode; and
a reading unit configured to read the marked marking information from the electrode,
wherein the controller is configured to register the read marking information and process data with the server.

2. The battery cell tracking system of claim 1, wherein the part of the electrode is a tab.

3. The battery cell tracking system of claim 2, wherein the tab includes at least one of an anode tab and a cathode tab.

4. The battery cell tracking system of claim 1, wherein the marking is performed in a notching process.

5. The battery cell tracking system of claim 1, wherein the marking is performed before a lamination process

6. The battery cell tracking system of claim 1, wherein the reading operation is performed in at least one of a lamination process, a folding process, and a packaging process.

7. The battery cell tracking system of claim 1, wherein the marked marking information includes a plurality of dots arranged in a matrix.

8. The battery cell tracking system of claim 7, wherein the total size of the plurality of dots is 3mm × 3mm.

9. The battery cell tracking system of claim 7, wherein the diameter of the dot is 10 µm or less.

10. The battery cell tracking system of claim 7, wherein the dot has a shape of a predetermined depth from the surface of the electrode 30 to the inside.

11. The battery cell tracking system of claim 10, wherein the predetermined depth is 1.7*µ*m or less.

12. The battery cell tracking system of claim 1, wherein the marking unit comprises a laser.

13. The battery cell tracking system of claim 12, wherein the laser moves at a speed of at least 3,000 m/s or more during the marking.

14. The battery cell tracking system of claim 1, wherein the reading unit includes:
a camera; and
a lighting disposed near the camera.

15. The battery cell tracking system of claim 1, wherein the marking information includes an identifier, process equipment, and process time.

16. A batter formed by stacking unit cells,
wherein the unit cell includes at least one electrode,
wherein the at least one electrode includes a tab including marking information, and
wherein the marking information includes an identifier, process equipment, and process time.
